# EUROPÄISCHE PATENTANMELDUNG

(11) **EP 4 737 080 A1**
(43) Veröffentlichungstag der Anmeldung: **06.05.2026**
(21) Anmeldenummer: 24209798.8
(22) Anmeldetag: 30.10.2024
(51) Int. Cl.: B28D 1/04, B23D 47/02, B28D 7/02

(54) **ARBEITSTISCH FÜR EINE SÄGEMASCHINE**

(71) Anmelder: Hilti Aktiengesellschaft, 9494 Schaan (LI)
(72) Erfinder: Laipple, Benno, 87662 Kaltental (DE)
(74) Vertreter: Hilti Aktiengesellschaft Corporate Intellectual Property

(57) **Zusammenfassung**

Die vorliegende Erfindung betrifft einen Arbeitstisch für eine Sägemaschine, wobei der Arbeitstisch (300) folgendes aufweist: eine Plattform mit einer ersten Längsführung (302) und einer parallel zur ersten Längsführung (302) angeordneten, zweiten Längsführung (304); eine erste Tischplatte (310), welche längs entlang der ersten Längsführung (302) verschiebbar ist; eine zweite Tischplatte (312), welche längs entlang der zweiten Längsführung (304) verschiebbar ist, wobei die erste und zweite Längsführung (302, 304) zwischen den ersten und zweiten Tischplatten (310, 312) angeordnet sind, und wobei die erste Längsführung (302) derart senkrecht zur Längsrichtung von der zweiten Längsführung (304) beabstandet ist, dass ein Spaltbereich zwischen der ersten und zweiten Längsführung (304) entsteht

## Beschreibung

Die vorliegende Erfindung betrifft einen Arbeitstisch für eine Sägemaschine, insbesondere für eine Steinsägemaschine. Die vorliegende Erfindung betrifft ferner eine Sägemaschine für Steinmaterialien mit dem erfindungsgemäßen Arbeitstisch.

### Hintergrund der Erfindung

Steinsägen sind Spezialmaschinen, die zum Sägen harter Materialien wie Ziegel, Beton oder Naturstein verwendet werden. Sie sind im Bauwesen und bei Renovierungsarbeiten unerlässlich, da sie präzise und effiziente Schnitte in Materialien ermöglichen, die von herkömmlichen Sägen nicht verarbeitet werden können.

Ein Hauptanliegen beim Einsatz von Steinsägen ist die Staubentwicklung, da die entstehenden feinen Partikel die Gesundheit der Arbeiter gefährden und die Arbeitsumgebung verschmutzen können. Aus diesem Grund kommen zwei Hauptmethoden der Staubvermeidung zum Einsatz: Wasserberieselung und Luftabsaugung.

Bei Steinsägen mit Wasserberieselung wird Wasser auf die Schnittstelle geleitet, um Staubpartikel unmittelbar beim Entstehen zu binden. Das Wasser reduziert den Staub effektiv und verhindert, dass er in die Atemluft der Arbeiter gelangt. Gleichzeitig kühlt das aufgebrachte Wasser das Sägeblatt, was dessen Lebensdauer verlängert und eine Überhitzung verhindert. Nachteilig ist an der Wasserberieselung, dass diese einen Wasseranschluss benötigt, welcher auf einigen Baustellen nicht vorhanden oder nur schwer zugänglich ist. Auch führt die Wasserberieslung zu Schmutzwasser, das sich auf dem Arbeitstisch der Säge ansammelt und abgeleitet werden muss.

Bei der Luftabsaugung wird durch eine Absaugvorrichtung an der Säge oder nahe der Schnittstelle der entstehende Staub direkt abgesaugt und in einen Filtersack oder Behälter geleitet. Die Absaugung hält das Arbeitsumfeld trocken und sauberer, was für besonders für das Arbeiten in Innenräumen geeignet ist. Es entsteht kein Schmutzwasser, und die Methode kann flexibler eingesetzt werden. Jedoch sind Luftabsaugungen oft weniger leistungsfähig bei Staubentfernung als Wasser.

Um die Effektivität von Luftabsaugen zu verbessern, ist es bekannt einen Längsschlitz im Arbeitstisch vorzusehen, in welchen sich zumindest ein unserer Endbereich des Sägeblatts hinein erstreckt. Eine Absaugung kann direkt über den Längsschlitz im Arbeitstisch erfolgen, sodass die Absaugung sehr nahe am Kontakt. Zwischen dem Sägeblatt und dem Werkstück erfolgt. Hierdurch lässt sich die Absaugwirkung steigern. Es hat sich jedoch herausgestellt, dass ein derartiger Längsschlitz im Arbeitstisch die Stabilität des Arbeitstisches reduziert. Hierdurch kann es insbesondere bei schweren Werkstücken zu Verspannungen kommen. Die Verspannungen können einerseits dazu führen, dass der Arbeitstisch nicht mehr leichtgängig bewegt werden kann. Andererseits kann die Ausrichtung des Arbeitstisches gegenüber dem Werkstück beeinträchtigt werden, wodurch unter Umständen ungerade Schnitte entstehen können.

Auf Grundlage der oben genannten Problemstellung ist es eine Aufgabe der vorliegenden Erfindung, einen Arbeitstisch für Sägemaschinen anzugeben, welcher eine hinreichende Stabilität aufweist und gleichzeitig eine direkte Absaugung an der Kontaktfläche zwischen dem Sägeblatt und dem Werkstück ermöglicht.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

Dementsprechend betrifft die vorliegende Erfindung einen Arbeitstisch für eine Sägemaschine, wobei der Arbeitstisch dazu ausgebildet ist ein Werkstück zu tragen, und wobei der Arbeitstisch folgendes aufweist:
- eine Plattform mit einer ersten Längsführung und einer parallel zur ersten Längsführung angeordneten, zweiten Längsführung;
- eine erste Tischplatte welche längs entlang der ersten Längsführung verschiebbar ist;
- eine zweite Tischplatte welche längs entlang der zweiten Längsführung verschiebbar ist,
wobei die erste und zweite Längsführung zwischen den ersten und zweiten Tischplatten angeordnet sind, und wobei die erste Längsführung derart senkrecht zur Längsrichtung von der zweiten Längsführung beabstandet ist, dass ein Spaltbereich zwischen der ersten und zweiten Längsführung entsteht.

Mit anderen Worten ist es eine Grundlage der vorliegenden Erfindung, dass der Arbeitstisch zweigeteilt wird. Dabei wird der Arbeitstisch in zwei unabhängig voneinander geführte Tischplatten unterteilt. Beide Tischplatten sind stabil in ihren jeweiligen Längsführungen verankert. Eine Verbindung der beiden Tischplatten miteinander ist dementsprechend zumindest für die Stabilität des Arbeitstisches nicht notwendig. Vielmehr kann eine Verbindung der beiden Tischplatten auf Grund einer erwünschten Synchronisation erfolgen. Hierfür ist jedoch ein kleines/leichtes Verbindungselement ausreichend, da dieses das Gewicht der Tischplatten bzw. des Werkstücks nicht abstützen muss. Durch die Aufteilung des Arbeitstisches in zwei Tischplatten kann darüber hinaus ein Spaltbereich zwischen den zwei Längsführungen, d. h. zwischen den beiden Tischplatten, bereitgestellt werden. Der Spaltbereich kann sich über die gesamte Längsrichtung des Arbeitstisches erstrecken, sodass eine Absaugvorrichtung sehr einfach in den Spaltbereich eingebracht werden kann. Die Absaugvorrichtung muss dementsprechend nicht integraler Bestandteil des Arbeitstisches sein, sondern kann einerseits austauschbar und andererseits nachrüstbar ausgebildet werden.

Nach einer weiteren Ausführungsform weist die erste Tischplatte erste Führungsmittel, insbesondere Führungsrollen, auf, welche entlang der Längsrichtung beweglich in der ersten Längsführung aufgenommen sind und/oder wobei die zweite Tischplatte erste Führungsmittel, insbesondere Führungsrollen aufweist, welche entlang der Längsrichtung beweglich in der ersten Längsführung aufgenommen sind. Gemäß dieser Ausführungsform sind die ersten und zweiten Tischplatten besonders leicht beweglich und werden verlässlich entlang der Längsrichtung geführt.

Nach einer weiteren Ausführungsform weist der Arbeitstisch eine dritte Längsführung auf, welche parallel zur ersten Längsführung und auf einer der zweiten Längsführung gegenüberliegenden Seite der ersten Längsführung angeordnet ist.

Nach einer weiteren Ausführungsform ist die erste Tischplatte zwischen der ersten und der dritten Längsführung verschiebbar angeordnet, wobei die erste Tischplatte vorzugsweise zweite Führungsmittel, insbesondere Führungsrollen aufweist, welche entlang der Längsrichtung beweglich in der dritten Längsführung aufgenommen sind. Mit anderen Worten, die Tischplatte ist zwischen zwei Längsführung in eingespannt, wodurch die Stabilität noch einmal verbessert wird. Es ist alternativ jedoch auch denkbar, dass nur eine Seite der ersten Tischplatte in einer Längsführung aufgenommen wird, während die andere Seite beispielsweise über einen längst strebe der Plattform gleitet. Nach diesem Ausführungsbeispiel lässt sich das Eigengewicht der ersten Tischplatte und gegebenenfalls des Werkstücks auf zwei Seiten der Tischplatte verteilen.

Nach einer weiteren Ausführungsform weist der Arbeitstisch eine vierte Längsführung auf, welche parallel zur zweiten Längsführung und auf einer der ersten Längsführung gegenüberliegenden Seite der zweiten Längsführung angeordnet ist.

Nach einer weiteren Ausführungsform ist die zweite Tischplatte zwischen der zweiten und der vierten Längsführung verschiebbar angeordnet, wobei die zweite Tischplatte vorzugsweise zweite Führungsmittel, insbesondere Führungsrollen aufweist, welche entlang der Längsrichtung beweglich in der vierten Längsführung aufgenommen sind.

Nach einer weiteren Ausführungsform weist die erste und/oder die zweite Längsführung einen im Wesentlichen C-förmigen Querschnitt auf. Wie dies später näher erläutert werden wird, ermöglicht der C-förmigen Querschnitt der Längsführungen, dass die Führungsmittel der Tischplatten einerseits verlässlich geführt werden. Andererseits können die Führungsmittel der Tischplatten durch das C-Profil vor Staubeintrag geschützt werden. Mit anderen Worten, der beim Segen entstehende Staub beeinträchtigt nicht das Führungsverhalten der Tischplatten. Vielmehr wird der so erzeugte Staub im Spaltbereich zwischen den C-förmigen Längsführungen abgesaugt. Es ist dabei besonders vorteilhaft, wenn die C-Profile der Längsführungen vom Spaltbereich Weg geöffnet sind, sodass Staub, welche über den Spaltbereich ein gesaugt wird, nicht in das C-Profil eindringen kann.

Nach einer weiteren Ausführungsform ist die erste Tischplatte vorzugsweise lösbar, derart mit der zweiten Tischplatte verbunden, dass die erste Tischplatte synchron mit der zweiten Tischplatte verschiebbar ist. Durch eine Synchronisierung der Bewegung der beiden Tischplatten wird erreicht, dass das Werkstück gerade auf das Sägeblatt zubewegt werden kann. Die Synchronisation kann über ein Verbindungselement zwischen den beiden Tischplatten erzielt werden. Beispielsweise kann das Verbindungselement an einem dem sägeblattabgewandten Ende der Tischplatten angeordnet sein. Das Verbindungselement oder auch Synchronisationselement kann insbesondere lösbar mit den beiden Tischplatten verbunden sein. Somit kann der Nutzer wahlweise die Tischplatten synchron oder unabhängig voneinander bewegen. Eine unabhängige Bewegung der beiden Tischplatten ist insbesondere dann von Vorteil, wenn Randbereiche des Werkstücks gesägt werden sollen. In diesem Fall kann das Werkstück auf lediglich eine der beiden Tischplatten gelegt und dem Sägeblatt zugeführt werden. Dies hat auch den Vorteil, dass der Nutzer seine Hände lediglich auf einer Seite des Sägeblatts hat, wodurch die Arbeitssicherheit erhöht werden kann.

Nach einer weiteren Ausführungsform weist die Plattform wenigstens eine Querstrebe auf, welche im Wesentlichen senkrecht zur Längsrichtung ausgerichtet ist und die erste und zweite Längsführung miteinander verbindet. Durch die Querstreben wird gewährleistet, dass die Längsführungen fest miteinander verbunden sind, sodass der Spaltbereich zwischen den Längsführungen konsistent ist. Insbesondere hat der Spaltbereich einen gleichbleibenden Durchmesser entlang der Längsrichtung.

Nach einer weiteren Ausführungsform ist eine Oberseite der ersten Tischplatte in einer gemeinsamen Ebene mit einer Oberseite der ersten Längsführung der zweiten Längsführung und der zweiten Tischplatte angeordnet. Dies hat den Vorteil, dass der Arbeitstisch eine ebene Oberfläche aufweist, über welche der Nutzer das Werkstück in Richtung des Sägeblattes schieben kann. Auch wird durch die Anordnung der verschiedenen Teile des Arbeitstisches in einer gemeinsamen Ebene verhindert, dass Lücken bzw. Vertiefungen entstehen, in welchen sich Pflegestaub ansammeln kann.

Ein weiterer Aspekt der vorliegenden Erfindung betrifft eine Sägemaschine für Steinmaterialien, wobei die Sägemaschine folgendes aufweist:
- ein oben erwähnter Arbeitstisch;
- ein Sägeblatt, welches derart gegenüber dem Arbeitstisch angeordnet ist, dass zumindest ein Teilbereich des Sägeblatts innerhalb des Spaltbereichs zwischen der ersten und der zweiten Längsführung angeordnet oder anbringbar ist;
- eine Absaugvorrichtung mit einem Saugkanal wobei sich zumindest ein Teilbereich des Saugkanals in den Spaltbereich erstreckt.

Nach einer weiteren Ausführungsform weist der Saugkanal der Absaugvorrichtung einen Saugschlitz auf, wobei sich zumindest ein Teilbereich des Sägeblatts in den Saugschlitz hinein erstreckt. Hierdurch wird die Effizienz der Staubabsaugung erhöht, da der Luftstrom der Absaugvorrichtung direkt im Kontaktbereich zwischen dem Sägeblattes und dem Werkstück angelegt wird.

Nach einer weiteren Ausführungsform weist der Saugkanal eine Oberseite auf, welche in einer gemeinsamen Ebene mit einer Oberseite der ersten Längsführung und der zweiten Längsführung angeordnet ist. Durch die Anordnung der verschiedenen Teile des Arbeitstisches in einer gemeinsamen Ebene wird verhindert, dass Lücken bzw. Vertiefungen entstehen, in welchen sich Pflegestaub ansammeln kann.

Nach einer weiteren Ausführungsform weist die Absaugvorrichtung einen Auffangbehälter zum Sammeln von Sägestaub auf, und wobei der Auffangbehälter unterhalb des Spaltbereichs angeordnet ist. Durch die Anordnung des Auffangbehälters unterhalb des Spaltbereichs können größere Partikel, welche während des Segen entstehen durch die Schwerkraft in den Auffangbehälter fallen. Derartige Partikel müssen demnach nicht durch den Luftstrom der Absaugvorrichtung erfasst werden und können dennoch sicher und sauber gesammelt werden.

Nach einer weiteren Ausführungsform ist das Sägeblatt mit einer Antriebsachse verbunden, wobei die Antriebsachse oberhalb des Arbeitstisches angeordnet ist.

Weitere Vorteile ergeben sich aus der folgenden Figurenbeschreibung. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung einer Steinsäge mit Luftabsaugung gemäß einer Ausführungsform der vorliegenden Erfindung;
- Fig. 2: eine schematische, perspektivische Draufsicht auf einen Arbeitstisch gemäß einer Ausführungsform der vorliegenden Erfindung;
- Fig. 3: schematischer Querschnitt durch einen Arbeitstisch mit Luftabsaugung gemäß einer Ausführungsform der vorliegenden Erfindung;
- Fig. 4: schematischer Querschnitt durch einen Arbeitstisch mit Luftabsaugung gemäß einer Ausführungsform der vorliegenden Erfindung.

### Detaillierte Beschreibung

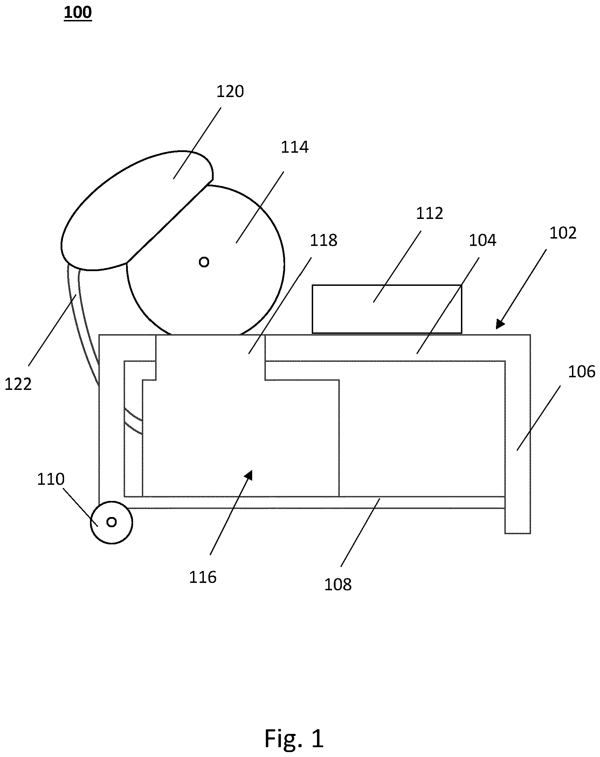

Die FIG. 1 zeigt eine schematische Darstellung einer Sägemaschine gemäß einer Ausführungsform der vorliegenden Erfindung. Die Sägemaschine 100 gemäß FIG. 1 ist eine Steinsäge. Die Sägemaschine 100 ist als eine Tischsäge ausgebildet. Die Sägemaschine 100 weist dementsprechend ein Rahmengestell 102 mit einem Arbeitstisch 104 auf. Der Arbeitstisch 104 kann mit Beinen 106 des Rahmengestells 102 verbunden sein. Einer oder mehrere Beine 106 können mit Rollen 110 verbunden sein, um das Rahmengestell und damit die Sägemaschine 100 leichter bewegen zu können. An einem unteren Endbereich der Beine 106 ist eine Regale 106 angeordnet, welches zum Tragen einer Absaugvorrichtung 116 dient.

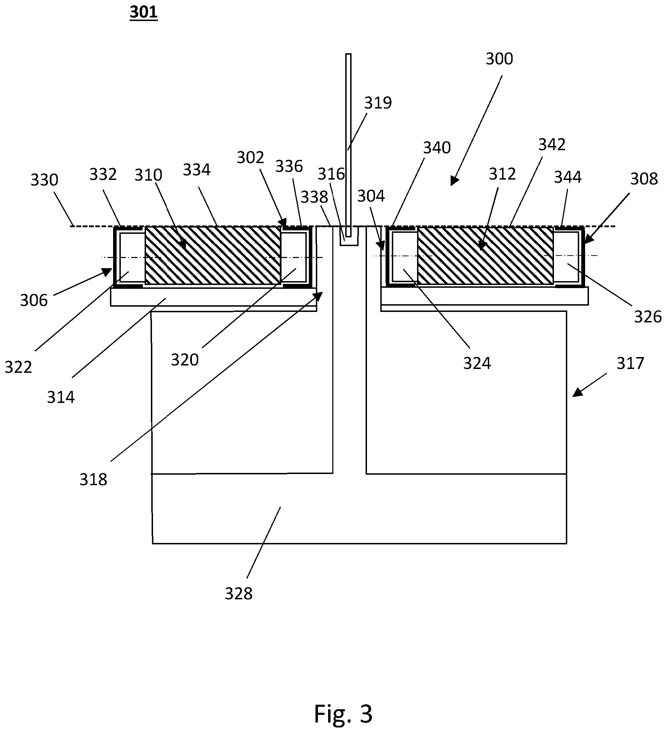

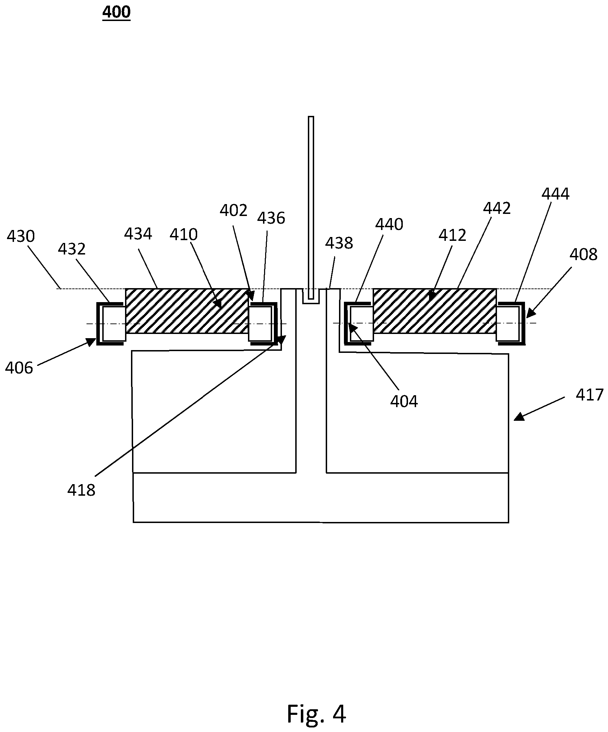

Der Arbeitstisch 104 dient als Ablagefläche für ein Werkstück 112. Beispielsweise kann es sich bei dem Werkstück 112 um einen Ziegel bzw. Beton oder Naturstein handeln. Generell ist es jedoch nicht ausgeschlossen, dass mit der erfindungsgemäßen Sägemaschine auch andere Materialien, wie beispielsweise Holz gesägt werden können. Wie dies insbesondere aus den Figuren 3 und 4 ersichtlich sein wird, weist der Arbeitstisch 104 translatorisch bewegbare Tischplatten auf. Die translatorisch belegbaren Tischplatten können dazu verwendet werden, dass Werkstück 112 zusammen mit den Tischplatten in Richtung eines Sägeblattes 114 zu bewegen.

Das Sägeblatt 114 ist in der in FIG. 1 dargestellten Ausführungsform insbesondere oberhalb des Arbeitstisches 104 angeordnet. Zwar ist dies nicht im Detail dargestellt, jedoch kann das Sägeblatt 114 von einem Sägearm getragen werden, welcher das Sägeblatt gegenüber dem Arbeitstisch 104 ausrichtet. In FIG. 1 ist ferner angedeutet, dass sich ein Teilbereich, insbesondere ein unterer Teilbereich, der Sägeplatz 114 in den Arbeitstisch 104 hinein erstreckt. Hierdurch wird einerseits gewährleistet, dass das Werkstück 112 in seiner gesamten Höhe durchschnitten werden kann und gleichzeitig eine besonders effektive Absaugwirkung erzielt wird.

Um den beim Segen des Werkstücks 112 entstehenden Staub abzusaugen, weist die Sägemaschine 100 eine Absaugvorrichtung 116 auf. Die Absaugvorrichtung weist eine nicht dargestellte Turbine auf, welche dazu dient einen Saugluftstrom zu erzeugen. Der Saugluftstrom zieht Luft-Staub-Gemisch über einen Saugkanal 118 in das Innere der Absaugvorrichtung 116. Im Inneren der Absaugvorrichtung 116 befindet sich wenigstens ein Filter zur Abscheidung des Staubs aus dem Luftstrom. Der aus dem Luftstrom gefiltert Staub kann sodann in einem Auffangbehälter der Absaugvorrichtung 116 gesammelt werden. Der Auffangbehälter kann sich beispielsweise direkt unterhalb des Saugkanal 118 befinden.

Des Socken 118 ist derart unterhalb des Sägeplatz 114 vorgesehen, dass dieser im Kontaktbereich zwischen dem Sägeblatt und dem Werkstück 112 angeordnet ist. Somit wird das Luft-Staub-Gemisch direkt am Entstehungspunkt abgesaugt. Um die Staubentwicklung noch besser kontrollieren zu können, weist die Sägemaschine 100 gemäß FIG. 1 eine Saughaube 120 auf. Die Saughaube 120 ist im Wesentlichen auf einer gegenüberliegenden Seite des Werkstücks 112 am Sägeblatt 114 angeordnet. Die Saughaube 120 überdeckt wenigstens einen Teilbereich des Sägeblattes 114. Das Sägeblatt 114 rotiert in der in FIG. 1 dargestellten Ausführungsform insbesondere im Uhrzeigersinn. Luft-Staub-Gemisch, welches nicht direkt durch den Saugkanal 118 entfernt werden konnte, wird durch die Saughaube 120 eingefangen. Hierzu ist die Saughaube 120 mit dem Innenraum der Absaugvorrichtung 116 verbunden. Insbesondere kann ein Saugschlauch 122 die Saughaube 120 mit einem Saugeinlass der Absaugvorrichtung 116 verbinden. Über den Saugschlauch 122 kann der durch die Turbine erzeugte Unterdruck an der Saughaube 120 angelegt werden.

In der in FIG. 1 dargestellten Ausführungsform der Sägemaschine dient die Absaugvorrichtung 116 also zum Absaugen von Staub über den Saugkanal 118 und die Saughaube 120. Da der Saugkanal 118 im Wesentlichen unterhalb des Sägeplatz des 114 angeordnet ist, ermöglicht die Schwerkraft auch ein Einsammeln von schweren Partikeln in den Auffangbehälter der Absaugvorrichtung 116. Dies ist insbesondere deshalb der Fall, da schwere Partikel unter Hilfe der Schwerkraft über den Saugkanal 118 in den Auffangbehälter fallen können.

Figur zwei zeigt eine schematische, perspektivische Draufsicht eines Arbeitstisches 200 nach einer Ausführungsform der vorliegenden Erfindung. Der Arbeitstisch 200 weist eine Plattform mit einer Vielzahl an Längsführungen 202, 204, 206, 208 auf. Die Längsführungen sind über eine oder mehrere Querstreben 214, 215, 217 miteinander verbunden. Die Querstreben 214, 215, 217 erstrecken sich im Wesentlichen senkrecht zu den Längsführungen 202, 204, 206, 208. Es sei jedoch an dieser Stelle angemerkt, dass die Erfindung nicht auf senkrechte Querstreben beschränkt ist. Vielmehr kann die Plattform viele weitere Tragelemente aufweisen, welche dazu dienen die Längsführungen gegeneinander auszurichten. Insbesondere sind die Längsführungen 202 ,204 ,206, 208 parallel zueinander ausgerichtet. Um die parallele Anordnung zu gewährleisten sind die Längsführungen 202, 204, 206, 208 fest mit den Querstreben 214, 215, 217 bzw. alternativen Trageelementen verbunden.

Eine erste Tischplatte 210 ist in Längsrichtung verschiebbar zwischen einer ersten Längsführung 202 und einer dritten Längsführung 206 angeordnet. Eine zweite Tischplatte 212 ist in Längsrichtung verschiebbar zwischen einer zweiten Längsführung 204 und einer vierten Längsführung 208 angeordnet. In der in Figur zwei gezeigten Ausführungsvariante sind die beiden Tischplatten 210 und 212 unabhängig voneinander in Längsrichtung verschiebbar. Es kann jedoch vorgesehen sein, dass der Arbeitstisch ein nicht dargestelltes Synchronisationselement aufweist, welches die beiden Tischplatten 210 und 212 miteinander verbindet. Nach dieser Ausführungsform wird gewährleistet, dass die beiden Tischplatten 210 und 212 stets zusammen, d. h. synchron, bewegt in Längsrichtung verschoben werden. Das Synchronisationselement kann insbesondere lösbar mit den Tischplatten 210 und 212 verbunden sein, sodass der Nutzer wählen kann, ob dieser beide Platten synchron oder unabhängig voneinander verschieben möchte. Das Synchronisationselement kann gleichzeitig als Anschlag und Führung für das Werkstück dienen. Beispielsweise wenn sich das Synchronisationselement senkrecht zur Längsrichtung, d. h. in Querrichtung erstreckt, kann das Werkstück senkrecht zum Sägeplatz ausgerichtet werden, in dem es an das Synchronisationselement angelegt wird.

Die erste Längsführung 202 und die zweite Längsführung 204 sind zwischen den beiden Tischplatten 210 und 212 angeordnet. Die ersten und zweiten Längsführungen 202, 204 verlaufen parallel und sind in Querrichtung voneinander beabstandet. Durch den Abstand der ersten und zweiten Längsführungen 202, 204 ergibt sich ein Spaltbereich 220 zwischen den ersten und zweiten Längsführungen 202, 204.

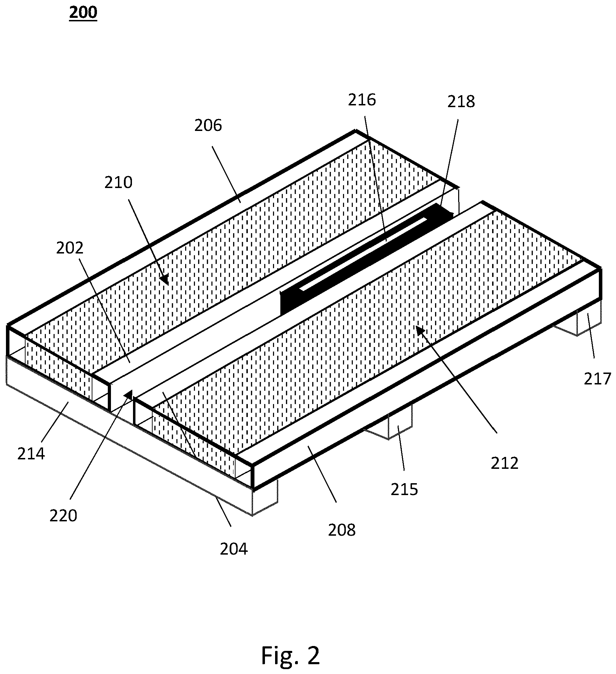

Der Abstand der beiden Längsführung in 202, 204 ist derart bemessen, dass ein Saugkanal 218 einer Absaugvorrichtung im Spaltbereich 220 angeordnet werden kann. Im Einzelnen erstreckt sich der Saugkanal 218 vom Gehäuse der Absaugvorrichtung in den Spaltbereich 220. Der Saugkanal 218 kann sich über die gesamte Breite (Querrichtung) des Spaltbereichs 220 erstrecken. In Längsrichtung ist der Saugkanal 218 gemäß Figur 2 derart bemessen, dass sich dieser nur über einen Teilbereich des Spaltbereich 220 erstreckt. Dies ermöglicht insbesondere das Einsetzen eines oder mehrerer Querstreben 215 zur Stabilisierung der Plattform. Es ist jedoch auch denkbar, dass der Saugkanal 218 einen Großteil bzw. den kompletten Spaltbereich 202 in Längsrichtung zwischen der ersten Querstreben 214 und der letzten Querstreben 217 ausfüllt. In diesem Fall müsste vorzugsweise auf die mittlere Querstreben 215 verzichtet werden.

Schließlich ist aus Figur zwei ersichtlich, dass der Saugkanal 218 einen Saugschlitz 216 aufweist. Der Saugschlitz 216 erstreckt sich in Längsrichtung des Saugkanals 218. des Saugschlitz 216 ist dazu ausgebildet, zumindest einen Teilbereich des Sägeblattes (Figur 1) aufzunehmen. Insbesondere kann sich der untere Teil eines Sägeblattes in den Saugschlitz hinein erstrecken. Der Saugschlitz 216 umgibt somit einen Teilbereich des Sägeblattes. Der Saugschlitz 216 ist derart bemessen, dass an allen Seiten des Sägeplatz, d. h. zu den Seitenflächen bzw. an der Vorder- und Rückseite des Sägeblattes, ausreichend Spiel besteht, um Saugluft am Sägeblatt vorbei in den Saugschlitz 216 und somit in den Saugkanal 218 hineinzuziehen. Auch bei längerer Ausgestaltung des Saugkanals, d. h. beispielsweise wenn der Saugkanal 218 im Wesentlichen die gesamte Längsausdehnung des Spaltbereich 220 abdeckt, ist der Saugschlitz 216 vorzugsweise nicht länger als dies in Figur zwei dargestellt ist. Es wird bevorzugt, den Saugschlitz 216 in seiner Ausdehnung insbesondere auf den Teilbereich des Sägeblattes anzupassen, welcher im Saugschlitz 216 aufgenommen wird.

Die FIG. 3 zeigt einen schematischen Querschnitt durch einen Arbeitstisch 300 mit einer schematischen Absaugvorrichtung 317 gemäß einer Ausführungsform der vorliegenden Erfindung. Der Arbeitstisch 300 gemäß FIG. 3 entspricht im Wesentlichen dem Arbeitstisch 200 gemäß Figur 2. Auch in der in FIG. 3 gezeigten Ausführungsform sind die ersten und zweiten Längsführungen 302, 304 in Querrichtung voneinander beanstandet, sodass ein Spaltbereich zwischen den Längsführungen 302, 304 entsteht. Ein Saugkanal 318 der Absaugvorrichtung 317 erstreckt sich von unten in den Spaltbereich zwischen den beiden Längsführungen 302, 304. In Querrichtung kann der in FIG. 3 ersichtliche Spalt zwischen dem Saugkanal 318 und den Längsführungen 302, 304 abgedichtet werden, um ein Eindringen von Staub zwischen dem Saugkanal und den Längsführungen zu verhindern. Auch der Saugkanal 318 gemäß FIG. 3 weist einen Saugschlitz 316 auf, in welchen sich ein unterer Teilbereich des Sägeblattes 319 erstreckt.

Der Saugkanal 318 ist einteilig mit dem Gehäuse der Absaugvorrichtung 317 verbunden. Senkrecht unterhalb des Saugschlitzes 316 des Saugkanals 318 befindet sich ein Auffangbehälter 328, welcher dazu ausgebildet ist herabfallenden Partikel bzw. Staub zusammen. Feinere Staubpartikel werden durch die Turbine der Absaugvorrichtung 317 (nicht dargestellt) in einen Filter (nicht dargestellt) befördert und von diesem aus dem Luftstrom abgeschieden. Der so abgeschiedene Filterstaub kann beispielsweise beim Abreinigen des Filters in den Auffangbehälter 328 fallen. Alternativ kann ein separater Auffangbehälter für den Staub des Filters vorgesehen sein.

In der in FIG. 3 gezeigten Ausführungsform sind sämtliche Längsführungen 302, 304, 306, 308 als C-förmige Profile ausgestaltet. Dabei sind die ersten und zweiten Längsführungen 302, 304 derart angeordnet, dass ihre offenen Enden voneinander weg gerichtet sind. Mit anderen Worten, die Rückwände der C förmigen Profile der ersten und zweiten Längsführung in 302, 304 begrenzen den Spaltbereich in Querrichtung. Die Längsführungen 302, 304, 306, 308 verlaufen auch hier parallel zueinander und sind an ihrer Unterseite mit Querstreben 314 zu einer Plattform verbunden.

Die erste Tischplatte 310 weist eine oder mehrere Rollen 320 auf, welche in der ersten Längsführung 302 aufgenommen sind. Die Rollen 320 der ersten Tischplatte 310 sind in Längsrichtung innerhalb des C-förmigen Profils der ersten Längsführung 302 beweglich. Hierzu sind die Rollen 320 in bekannter Weise rotierbar am Grundkörper der Tischplatte 310 angebracht. Die erste Tischplatte 310 weist ferner eine oder mehrere Rollen 322 auf, welche in der dritten Längsführung 306 aufgenommen sind. Die Rollen 322 sind innerhalb des C-förmigen Profils der dritten Längsführung 306 beweglich. Die dritte Längsführung 306 ist gemäß dieser Ausführungsform spiegelverkehrt zur ersten Längsführung 302 angeordnet, d. h. das offene Ende der C-förmigen dritten Längsführung 306 ist in Richtung des offenen Endes der C-förmigen ersten Längsführung 302 ausgerichtet. Die Rollen 322, welche innerhalb der dritten Längsführung 306 angeordnet sind, sind mit dem Grundkörper der ersten Tischplatte 310 rotierbar verbunden.

Die zweite Tischplatte 312 weist eine oder mehrere Rollen 324 auf, welche in der zweiten Längsführung 304 aufgenommen sind. Die Rollen 324 der zweiten Tischplatte 312 sind in Längsrichtung innerhalb des C-förmigen Profils der zweiten Längsführung 304 beweglich. Hierzu sind die Rollen 324 in bekannter Weise rotierbar am Grundkörper der zweiten Tischplatte 312 angebracht. Die zweite Tischplatte 312 weist ferner eine oder mehrere Rollen 326 auf, welche in der vierten Längsführung 308 aufgenommen sind. Die Rollen 326 sind innerhalb des C-förmigen Profils der vierten Längsführung 308 beweglich. Die vierte Längsführung 308 ist gemäß dieser Ausführungsform spiegelverkehrt zur zweiten Längsführung 304 angeordnet, d. h. das offene Ende der C-förmigen vierten Längsführung 308 ist in Richtung des offenen Endes der C-förmigen, zweiten Längsführung 304 ausgerichtet. Die Rollen 326, welche innerhalb der vierten Längsführung 308 angeordnet sind, sind mit dem Grundkörper der zweiten Tischplatte 312 rotierbar verbunden.

Der Arbeitstisch 300 gemäß FIG. 3 ist derart ausgestaltet, dass eine Oberseite aller Längsführungen 302, 304, 306, 308 sowie die ersten und zweiten Tischplatten 310, 312 in einer gemeinsamen Ebene 330 angeordnet sind. Hierdurch ergibt sich eine besonders flache Oberseite des Arbeitstisches 300, auf welcher das Werkstück ohne Behinderungen relativ zum Sägeblatt 319 bewegt werden kann. Im Einzelnen weist die erste Längsführung 302 eine Oberseite 336 auf, welche entlang der gemeinsamen Ebene 330 verläuft. Eine Oberseite 332 der dritten Längsführung 306 verläuft entlang der gemeinsamen Ebene 330. Auch eine Oberseite 334 der ersten Tischplatte 310 verläuft in der gemeinsamen Ebene 330. Die zweite Längsführung 304 weist eine Oberseite 340 auf, welche entlang der gemeinsamen Ebene 330 verläuft. Eine Oberseite 344 der vierten Längsführung 308 verläuft entlang der gemeinsamen Ebene 330. Auch eine Oberseite 342 der zweiten Tischplatte 320 verläuft in der gemeinsamen Ebene 330.

Aus FIG. 3 ist ferner ersichtlich, dass eine Oberseite 338 des Saugkanals 318 ebenfalls in der gemeinsamen Ebene 330 liegt. Die gezeigten Oberseiten 332, 334, 336, 338, 340, 342, 344 bilden zusammen eine ebene Oberfläche zum Auflegen des Werkstücks.

Eine alternative Ausführungsform des Arbeitstisches gemäß der vorliegenden Erfindung ist in FIG. 4 dargestellt. Der schematische Querschnitt gemäß FIG. 4 zeigt eine Ausgestaltung des Arbeitstisches 400 bei der lediglich die Oberseiten 434, 442 der Tischplatten 410, 412 sowie die Oberseite 438 des Saukanals 418 in einer gemeinsamen Ebene 430 liegen. Im Gegensatz Ausführungsform gemäß FIG. 3 sind die Oberseiten 432, 436, 440, 444 der Längsführungen 402, 404, 406, 408 nicht in der gemeinsamen Ebene 430 angeordnet. Vielmehr sind diese gegenüber der gemeinsamen Ebene 430, vorzugsweise nach unten, d. h. in Richtung der Absaugvorrichtung 417, versetzt angeordnet.

Die vorliegende Erfindung ist nicht auf die in den Figuren dargestellten Ausführungsformen beschränkt, sondern ergibt sich aus einer Kombination sämtlicher hierin offenbar der Merkmale. Insbesondere ist die Erfindung nicht auf die Art der dargestellten Führungen beschränkt. Es kann sich hierbei beispielsweise auch um Gleitführungen handeln. Auch sind die Längsführungen nicht auf das C-förmigen Profil beschränkt. Vielmehr können diese sämtliche Profilarten aufweisen, welche zur Führung der Tischplatten in Längsrichtung geeignet sind.

### Bezugszeichenliste

- 100: Sägemaschine
- 102: Rahmengestell
- 104: Arbeitstisch
- 106: Tischbein
- 108: Regal
- 110: Rolle
- 112: Werkstück
- 114: Sägeblatt
- 116: Absaugvorrichtung
- 118: Saugkanal
- 120: Saughaube
- 122: Saugschlauch
- 200: Arbeitstisch
- 202, 204, 206, 208: Längsführung
- 210,212: Tischplatte
- 214,215,217: Querstreben
- 216: Saugschlitz
- 218: Saugkanal
- 220: Spaltbereich
- 300: Arbeitstisch
- 302, 304, 306, 308: Längsführung
- 310, 312: Tischplatte
- 314: Querstreben
- 316: Saugschlitz
- 317: Absaugvorrichtung
- 318: Saugkanal
- 320, 322, 324, 326: Rollen
- 328: Auffangbehälter
- 330: gemeinsame Ebene
- 332, 334, 336, 338 340, 342, 344: Oberseite
- 400: Arbeitstisch
- 402, 404, 406, 408: Längsführung
- 410,412: Tischplatte
- 417: Absaugvorrichtung
- 418: Saugkanal
- 430: gemeinsame Ebene
- 432, 434, 436, 438 440, 442, 444: Oberseite

## Patentansprüche

1. Arbeitstisch für eine Sägemaschine, wobei der Arbeitstisch (300) dazu ausgebildet ist ein Werkstück zu tragen, und wobei der Arbeitstisch (300) folgendes aufweist:
- eine Plattform mit einer ersten Längsführung (302) und einer parallel zur ersten Längsführung (302) angeordneten, zweiten Längsführung (304);
- eine erste Tischplatte (310), welche längs entlang der ersten Längsführung (302) verschiebbar ist;
- eine zweite Tischplatte (312), welche längs entlang der zweiten Längsführung (304) verschiebbar ist,
wobei die erste und zweite Längsführung (302, 304) zwischen den ersten und zweiten Tischplatten (310, 312) angeordnet sind, und wobei die erste Längsführung (302) derart senkrecht zur Längsrichtung von der zweiten Längsführung (304) beabstandet ist, dass ein Spaltbereich zwischen der ersten und zweiten Längsführung (304) entsteht.

2. Arbeitstisch (300) nach Anspruch 1,
wobei die erste Tischplatte (310) erste Führungsmittel, insbesondere Führungsrollen (320), aufweist, welche entlang der Längsrichtung beweglich in der ersten Längsführung (302) aufgenommen sind, und/oder
wobei die zweite Tischplatte (312) erste Führungsmittel, insbesondere Führungsrollen (324), aufweist, welche entlang der Längsrichtung beweglich in der ersten Längsführung (302) aufgenommen sind.

3. Arbeitstisch (300) nach Anspruch 1 oder 2,
wobei der Arbeitstisch (300) eine dritte Längsführung (306) aufweist, welche parallel zur ersten Längsführung (302) und auf einer der zweiten Längsführung (304) gegenüberliegenden Seite der ersten Längsführung (302) angeordnet ist.

4. Arbeitstisch (300) nach Anspruch 3,
wobei die erste Tischplatte (310) zwischen der ersten und der dritten Längsführung (302, 306) verschiebbar angeordnet ist, wobei die erste Tischplatte (310) vorzugsweise zweite Führungsmittel, insbesondere Führungsrollen (322), aufweist, welche entlang der Längsrichtung beweglich in der dritten Längsführung (306) aufgenommen sind.

5. Arbeitstisch (300) nach einem der Ansprüche 1 bis 4,
wobei der Arbeitstisch (300) eine vierte Längsführung (308) aufweist, welche parallel zur zweiten Längsführung (304) und auf einer der ersten Längsführung (302) gegenüberliegenden Seite der zweiten Längsführung (304) angeordnet ist.

6. Arbeitstisch (300) nach Anspruch 5,
wobei die zweite Tischplatte (312) zwischen der zweiten und der vierten Längsführung (304, 308) verschiebbar angeordnet ist, wobei die zweite Tischplatte (312) vorzugsweise zweite Führungsmittel, insbesondere Führungsrollen (326), aufweist, welche entlang der Längsrichtung beweglich in der vierten Längsführung aufgenommen sind.

7. Arbeitstisch (300) nach einem der Ansprüche 1 bis 6,
wobei die erste und/oder die zweite Längsführung (302, 304) einen im Wesentlichen C-förmigen Querschnitt aufweisen.

8. Arbeitstisch (300) nach einem der Ansprüche 1 bis 7,
wobei die erste Tischplatte (310), vorzugsweise lösbar, derart mit der zweiten Tischplatte (312) verbunden ist, dass die erste Tischplatte (310) synchron mit der zweiten Tischplatte verschiebbar ist.

9. Arbeitstisch (300) nach einem der Ansprüche 1 bis 8,
wobei die Plattform wenigstens eine Querstrebe (314) aufweist, welche im Wesentlichen senkrecht zur Längsrichtung ausgerichtet ist und die erste und zweite Längsführung (302, 304) miteinander verbindet.

10. Arbeitstisch (300) nach einem der Ansprüche 1 bis 9,
wobei eine Oberseite (334) der ersten Tischplatte (310) in einer gemeinsamen Ebene (330) mit einer Oberseite (336, 340, 342) der ersten Längsführung (302), der zweiten Längsführung (304) und der zweiten Tischplatte (312) angeordnet ist.

11. Sägemaschine (301) für Steinmaterialien, wobei die Sägemaschine folgendes aufweist:
- einen Arbeitstisch (300) nach einem der Ansprüche 1 bis 10;
- ein Sägeblatt (319), welches derart gegenüber dem Arbeitstisch (300) angeordnet ist, dass zumindest ein Teilbereich des Sägeblatts (319) innerhalb des Spaltbereichs zwischen der ersten und der zweiten Längsführung (302, 304) angeordnet oder anbringbar ist;
- eine Absaugvorrichtung (317) mit einem Saugkanal (318), wobei sich zumindest ein Teilbereich des Saugkanals (318) in den Spaltbereich erstreckt.

12. Sägemaschine nach Anspruch 11,
wobei der Saugkanal (318) der Absaugvorrichtung (317) einen Saugschlitz aufweist und wobei sich zumindest ein Teilbereich des Sägeblatts in den Saugschlitz hinein erstreckt.

13. Sägemaschine nach Anspruch 11 oder 12,
wobei der Saugkanal (318) eine Oberseite (338) aufweist, welche in einer gemeinsamen Ebene (330) mit einer Oberseite (336, 340) der ersten Längsführung (302) und der zweiten Längsführung (304) angeordnet ist.

14. Sägemaschine nach einem der Ansprüche 11 bis 13,
wobei die Absaugvorrichtung (317) einen Auffangbehälter (328) zum Sammeln von Sägestaub aufweist, und wobei der Auffangbehälter (328) unterhalb des Spaltbereichs angeordnet ist.

15. Sägemaschine nach einem der Ansprüche 10 bis 14,
wobei das Sägeblatt (319) mit einer Antriebsachse verbunden ist, wobei die Antriebsachse oberhalb des Arbeitstisches (300) angeordnet ist.
